# EUROPÄISCHE PATENTSCHRIFT

(11) **EP 0 646 939 B1**
(45) Veröffentlichungstag und Bekanntmachung des Hinweises auf die Patenterteilung: **27.11.1996**
(21) Anmeldenummer: 94112403.4
(22) Anmeldetag: 09.08.1994
(51) Int. Cl.: H01H 27/06, B60R 25/02

(54) **Zündanlasserschalter für Kraftfahrzeuge mit einer Aufnahme für eine Zusatzeinrichtung**
Ignition switch for motor vehicles with a reception for an additional device
Interrupteur de démarrage pour véhicules automobiles avec récepteur pour un dispositif additionnel

(30) Priorität: 05.10.1993 DE 9315048 U
(43) Veröffentlichungstag der Anmeldung: 05.04.1995
(73) Patentinhaber: Standard Establishment, FL-9490 Vaduz/Liechtenstein (LI)
(72) Erfinder:
(74) Vertreter: Schwarz, Klaus-Jürgen, Dipl.-Ing.

(56) Entgegenhaltungen:
- EP-A- 0 497 661
- DE-A- 1 926 723
- DE-C- 3 318 415

## Beschreibung

Die Erfindung betrifft einen Zündanlasserschalter für Kraftfahrzeuge mit einer Aufnahme für eine Zusatzeinrichtung, wie zum Beispiel eine mit dem Schalter zusammenwirkende Abziehsperre für den Zündschlüssel.

Ein Zündanlasserschalter für Kraftfahrzeuge mit einer Aufnahme für eine Zusatzeinrichtung, wie zum Beispiel eine mit dem Schalter Zusammenwirkende Drehsperre, ist aus DE-A-3318415 bekannt.

Für eine vom Produktionsstandort und vom späteren Vertrieb von Kraftfahrzeugen in den verschiedensten Ländern und Kontinenten unabhängige, möglichst einheitliche Fertigung der jeweiligen Kraftfahrzeugtypen und Baureihen ist es erforderlich, auch die Zubehörteile schon von vornherein so zu gestalten, daß sie ohne konstruktive Änderungen entsprechend den unterschiedlichen gesetzlichen Vorschriften oder auch entsprechend den Wünschen des Fahrzeughalters mit den unterschiedlichsten Zusatzeinrichtungen schon ab Werk oder auch zu einem späteren Zeitpunkt ausgestattet werden können.

So hat sich gerade in letzter Zeit auch der Zündanlasserschalter als ein für die Sicherheit von Fahrzeugen gegen Diebstahl und unbefugten Gebrauch besonders wichtiges Zubehörteil erwiesen.

Zündanlasserschalter sind für die einwandfreie Funktion von Kraftfahrzeugen besonders wichtige Bauteile, die dementsprechend konstruktionsmäßig auch so ausgelegt sind, daß sie über die Gesamtlebensdauer eines Fahrzeuges zuverlässig funktionsfähig bleiben. Müssen solche qualitativ hochwertigen Bauteile wegen der von Land zu Land mitunter unterschiedlichen Sicherheitsvorschriften oder wegen der zunehmenden Kriminalität auf dem Kraftfahrzeugsektor nach- oder umgerüstet werden, so bleibt gegenwärtig nur die Möglichkeit, den vorhandenen Zündanlasserschalter gegen eine neue oder anderere Ausführungsform mit der gewünschten integrierten Zusatzeinrichtung zu ersetzen. Für den an sich noch voll funktionsfähigen Schalter gibt es in der Regel keine Wiederverwendungsmöglichkeit, womit ein unerwünschter wirtschaftlicher Verlust verbunden ist.

Der Erfindung liegt die Aufgabe zugrunde, einen Zündanlasserschalter mit einer Aufnahme für eine Zusatzeinrichtung nach dem Oberbegriff des Anspruches 1 so auszubilden, daß dieser ganz nach Bedarf schon ab Werk oder auch zu einem beliebigen späteren Zeitpunkt ohne konstruktive Änderungen in einfacher Weise mit der gewünschten Zusatzeinrichtung ausgestattet werden kann, wobei sichergestellt ist, daß der Zündanlasserschalter als solcher mit oder ohne die Zusatzeinrichtung gleichermaßen funktionsfähig ist.

Diese Aufgabe wird durch die Merkmale des Anspruchs 1 gelöst. Durch die Erfindung wird die Herstellung sowohl des Zündanlasserschalters als auch der dafür vorgesehenen Zusatzeinrichtungen insbesondere insofern vereinfacht und kostengünstiger gestaltet, als durch die einheitliche Ausführung des Zündanlasserschalters mit integriertem Gehäuseansatz und zugehörigem Einschub für die Aufnahme der verschiedensten Zusatzeinrichtungen große Stückzahlen ohne jede konstruktive Änderung gefertigt und auch nur in dieser einheitlichen Ausführungsform montiert werden können. Dies verbessert nicht nur die Herstellung und die Montage von Zündanlasserschalter und Zusatzeinrichtungen, sondern vereinfacht auch deren Lagerhaltung in prägnanter Weise.

Die Anbringung des Einschubes sowohl mit als auch ohne Zusatzeinrichtung an dem Gehäuse des Zündanlasserschalters wird besonders dadurch erleichtert, daß das Gehäuse des Zündanlasserschalters einen im wesentlichen kreisförmigen Querschnitt hat, von dem der Gehäuseansatz mit der Aufnahme für die Zusatzeinrichtung etwa tangential zu der Gehäuseaußenwand und gegenüber der Mittelachse des Schaltergehäuses seitlich versetzt hervorsteht.

Eine besonders geschützte Anordnung der Zusatzeinrichtung wird weiterhin dadurch ermöglicht, daß die Aufnahmeöffnung für die Zusatzeinrichtung an dem Gehäuseansatz von drei jeweils rechtwinklig aneinander anschließenden Wandteilen umschlossen ist, die an der Unterseite des Gehäuseansatzes eine Seitenwandöffnung zwischen sich freilassen, die zusammen mit der Aufnahmeöffnung durch den Einschub verschließbar ist. Auch eine nachträgliche Montage einer Zusatzeinrichtung an dem Zündanlasserschalter wird hierdurch nicht behindert.

Durch das Merkmal des Anspruches 4 werden auch die Funktionsteile des Zündanlasserschalters besonders dann geschützt, wenn dieser nicht mit einer Zusatzeinrichtung bestückt ist.

Das Merkmal des Anspruches 5 ermöglicht wiederum eine besonders einfache und sichere Halterung der an dem Einschub angebrachten Zusatzeinrichtungen, wobei die Befestigung des Einschubes an dem Gehäuseansatz des Zündanlasserschalters auch noch durch das Merkmal des Anspruches 6 begünstigt wird.

Durch die Merkmale der Ansprüche 6 und 7 wird auch eine besonders montagefreundliche und dauerhafte Klippbefestigung des Einschubes mit der Zusatzeinrichtung an dem Gehäuseansatz des Zündanlasserschalters erreicht, während das Merkmal des Anspruches 8 eine besonders vorteilhafte Anbringung der verschiedensten Zusatzeinrichtungen an dem Einschub ermöglicht.

Durch die Merkmale der Ansprüche 9 und 10 wird weiterhin eine besonders kostengünstige und materialsparende Fertigung derartiger Zündanlasserschalter mit Zusatzeinrichtung ermöglicht.

Ein bevorzugtes Ausführungsbeispiel der Erfindung ist in der Zeichnung schematisch dargestellt. Es zeigen
- Fig. 1: einen Zündanlasserschalter mit einer Aufnahme für eine Zusatzeinrichtung in perspektivischer Darstellung,
- Fig. 2: einen Einschub für die Anbringung einer Zusatzeinrichtung an dem Zündanlasserschalter von Fig. 1 ebenfalls in perspektivischer Ansicht,
- Fig. 3: einen Teilschnitt durch die Aufnahme an dem Zündanlasserschalter gemäß Schnittlinie III - III von Fig.l und
- Fig. 4: einen weiteren Schnitt durch den Einschub gemäß Schnittlinie IV - IV von Fig. 2.

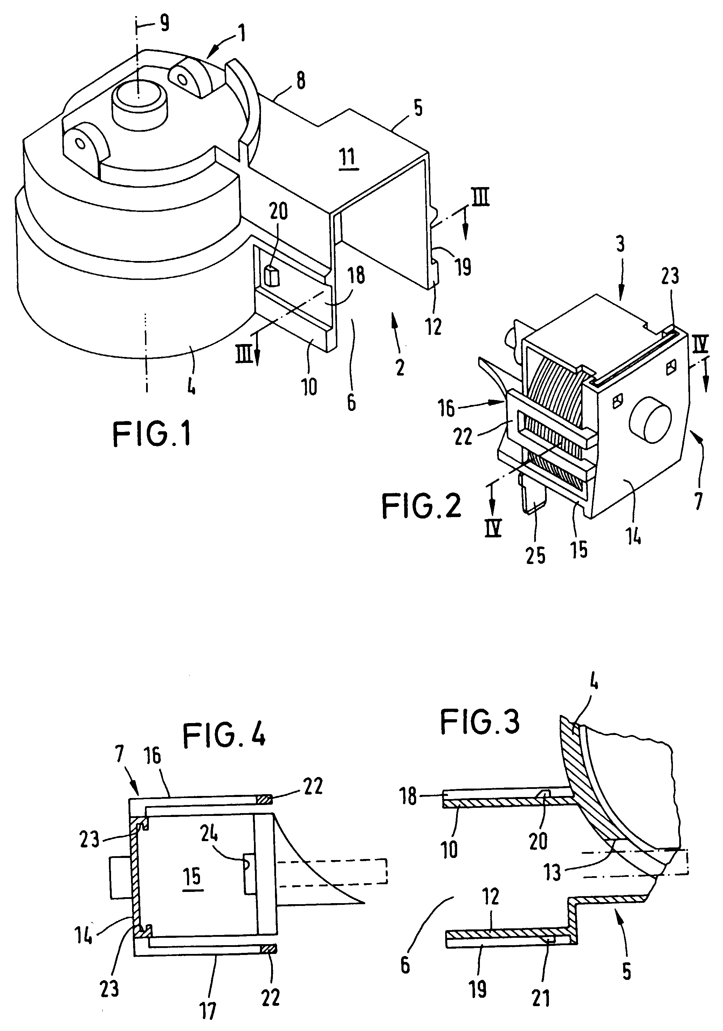

Der in Fig. 1 gezeigte Zündanlasserschalter 1 für Kraftfahrzeuge hat eine Aufnahme 2 für eine Zusatzeinrichtung 3, wie zum Beispiel eine mit dem Schalter zusammenwirkende Abziehsperre für den Zündschlüssel oder dergleichen.

Für die Anbringung der Zusatzeinrichtung 3 besitzt das Gehäuse 4 des Zündanlasserschalters einen seitlich hervorstehenden Gehäuseansatz 5 mit einer Aufnahmeöffnung 6 für einen Einschub 7 mit der Zusatzeinrichtung 3, der die Aufnahmeöffnung 6 vollständig abdeckt und mittels einer lösbaren Schnapprastverbindung an den Gehäuseansatz 5 anklippbar ist.

Das Gehäuse 4 des Zündanlasserschalters 1 hat einen im wesentlichen kreisförmigen Querschnitt, von dem der Gehäuseansatz 5 mit der Aufnahme 2 für die Zusatzeinrichtung 3 etwa tangential zu der Gehäuseaußenwand 8 und gegenüber der Mittelachse 9 des Schaltergehäuses seitlich versetzt hervorsteht.

Die Aufnahmeöffnung 6 für die Zusatzeinrichtung 3 an dem Gehäuseansatz 5 ist von drei jeweils rechtwinklig aneinander anschließenden Wandteilen 10, 11, 12 umschlossen, die an der Unterseite des Gehäuseansatzes 5 eine Seitenwandöffnung zwischen sich freilassen, die zusammen mit der Aufnahmeöffnung 6 durch den Einschub 7 verschließbar ist.

Die Außenwand des Schaltergehäuses 4 weist im Bereich des Gehäuseansatzes 5 für die Zusatzeinrichtung einen Durchbruch 13 auf, der nur so weit geöffnet ist, wie dies für die Funktion der Zusatzeinrichtung 3 erforderlich ist.

Der Einschub 7 ist winkelförmig ausgebildet mit einer die Aufnahmeöffnung 6 an dem Gehäuseansatz 5 verschließenden Rückwand 14 und einem davon rechtwinklig hervorstehenden Einschubboden 15, der den Gehäuseansatz 5 an dessen Unterseite verschließt, wobei von der Rückwand 14 des Einschubes 7 beiderseits des Einschubbodens 15 parallele, gegeneinander federnde Klippbügel 16, 17 hervorstehen, die in zueinander parallele Führungsnuten 18, 19 an den beiden parallelen Seitenwänden des Gehäuseansatzes 5 eingreifen und in der Einschubstellung durch Rastnasen 20, 21 gesichert sind.

Die Klippbügel 16, 17 sind U-förmig ausgebildet und werden in der Einschubstellung mit ihrem U-Steg 22 durch in den Führungsnuten 18, 19 am Gehäuseansatz 5 nach außen ragende Rastnasen 20, 21 an beiden Seitenwänden des Gehäuseansatzes gesichert.

An der Rückwand 14 und am Boden 15 des Einschubes 7 sind Haltenuten 23 und/oder Durchbrüche 24 für eine Klippbefestigung unterschiedlicher Zusatzeinrichtungen 3 vorhanden, wobei durch den Durchbruch 24 beispielsweise eine Kontaktzunge 25 der Zusatzeinrichtung 3 nach außen hervorstehen kann.

Sowohl das Schaltergehäuse 4 mit dem Gehäuseansatz 5 als auch der die Aufnahmeöffnung 6 an dem Gehäuseansatz 5 abdeckende Einschub 7 mit den von der Rückwand 14 parallel zueinander hervorstehenden seitlichen Klippbügeln 16, 17 sind einteilig aus Kunststoff geformt.

An dem Einschub 7 können Zusatzeinrichtungen 3 der verschiedensten Art befestigt werden. Ohne Zusatzeinrichtung dient der Einschub 7 ohne jede konstruktive Änderung zum Verschließen der seitlichen Aufnahme 2 an dem Gehäuseansatz 5.

### Liste der Bezugszeichen

- 1: Zündanlasserschalter
- 2: Aufnahme
- 3: Zusatzeinrichtung
- 4: Gehäuse, Schaltergehäuse
- 5: Gehäuseansatz
- 6: Aufnahmeöffnung
- 7: Einschub
- 8: Gehäuseaußenwand
- 9: Mittelachse
- 10: Wandteil
- 11: Wandteil
- 12: Wandteil
- 13: Durchbruch
- 14: Rückwand
- 15: Einschubboden
- 16: Klippbügel
- 17: Klippbügel
- 18: Führungsnut
- 19: Führungsnut
- 20: Rastnase
- 21: Rastnase
- 22: U-Steg
- 23: Haltenut
- 24: Durchbruch
- 25: Kontaktzunge

## Patentansprüche

1. Zündanlasserschalter (1) für Kraftfahrzeuge mit einer Aufnahme für eine Zusatzeinrichtung (3), wie zum Beispiel eine mit dem Schalter zusammenwirkende Abziehsperre für den Zündschlüssel, **dadurch gekennzeichnet**, daß das Gehäuse (4) des Zündanlasserschalters (1) für die Aufnahme der Zusatzeinrichtung (3) einen Einschub (7) aufweist, der in einen seitlich hervorstehenden Gehäuseansatz (5) mit einer Aufnahmeöffnung (6) eingesteckt, die Aufnahmeöffnung (6) vollständig abdeckt und mittels einer lösbaren Schnapprastverbindung an den Gehäuseansatz (5) anklippbar ist.

2. Zündanlasserschalter mit Zusatzeinrichtung nach Anspruch 1, **dadurch gekennzeichnet**, daß das Gehäuse (4) des Zündanlasserschalters (1) einen im wesentlichen kreisförmigen Querschnitt hat, von dem der Gehäuseansatz (5) mit der Aufnahme (2) für die Zusatzeinrichtung (3) etwa tangential zu der Gehäuseaußenwand (8) und gegenüber der Mittelachse (9) des Schaltergehäuses (4) seitlich versetzt hervorsteht.

3. Zündanlasserschalter mit Zusatzeinrichtung nach Anspruch 1 oder 2, **dadurch gekennzeichnet**, daß die Aufnahmeöffnung (6) für die Zusatzeinrichtung (3) an dem Gehäuseansatz (5) von drei jeweils rechtwinklig aneinander anschließenden Wandteilen (10, 11, 12) umschlossen ist, die an der Unterseite des Gehäuseansatzes (5) eine Seitenwandöffnung zwischen sich freilassen, die zusammen mit der Aufnahmeöffnung (6) durch den Einschub (7) verschließbar ist.

4. Zündanlasserschalter mit Zusatzeinrichtung nach einem der Ansprüche 1 bis 3, **dadurch gekennzeichnet**, daß die Außenwand des Schaltergehäuses (4) im Bereich des Gehäuseansatzes (5) für die Zusatzeinrichtung einen Durchbruch (13) aufweist, der nur so weit geöffnet ist, wie dies für die Funktion der Zusatzeinrichtung (3) erforderlich ist.

5. Zündanlasserschalter mit Zusatzeinrichtung nach einem der Ansprüche 1 bis 4, **dadurch gekennzeichnet**, daß der Einschub (7) winkelförmig ausgebildet ist mit einer die Aufnahmeöffnung (6) an dem Gehäuseansatz (5) verschließenden Rückwand (14) und einem davon rechtwinklig hervorstehenden Einschubboden (15), der den Gehäuseansatz (5) an dessen Unterseite verschließt.

6. Zündanlasserschalter mit Zusatzeinrichtung nach einem der Ansprüche 1 bis 5, **dadurch gekennzeichnet**, daß von der Rückwand (14) des Einschubes (7) beiderseits des Einschubbodens (15) parallele federnde Klippbügel (16, 17) hervorstehen, die in zueinander parallele Führungsnuten (18, 19) an den beiden parallelen Seitenwänden des Gehäuseansatzes (5) eingrei-fen und in der Einschubstellung durch Rastnasen (20, 21) gesichert sind.

7. Zündanlasserschalter mit Zusatzeinrichtung nach einem der Ansprüche 1 bis 6, **dadurch gekennzeichnet**, daß die Klippbügel (16, 17) U-förmig ausgebildet sind und in der Einschubstellung mit ihrem U-Steg (22) durch in den Führungsnuten (20, 21) am Gehäuseansatz (5) nach außen ragende Rastnasen (20, 21) an beiden Seitenwänden des Gehäuseansatzes (5) gesichert sind.

8. Zündanlasserschalter mit Zusatzeinrichtung nach einem der Ansprüche 1 bis 7, **dadurch gekennzeichnet,** daß an der Rückwand (14) und am Boden (15) des Einschubes (7) Haltenuten (23) und/oder Durchbrüche (24) für eine Klippbefestigung unterschiedlicher Zusatzeinrichtungen (3) vorhanden sind.

9. Zündanlasserschalter mit Zusatzeinrichtung nach einem der Ansprüche 1 bis 8, **dadurch gekennzeichnet,** daß das Schaltergehäuse (4) mit dem Gehäuseansatz (5) einstückig aus Kunststoff geformt ist.

10. Zündanlasserschalter mit Zusatzeinrichtung nach einem der Ansprüche 1 bis 9, **dadurch gekennzeichnet,** daß der die Aufnahmeöffnung (6) an dem Gehäuseansatz (5) abdeckende Einschub (7) mit den von der Rückwand (14) parallel zueinander hervorstehenden seitlichen Klippbügeln (16, 17) einteilig aus Kunststoff geformt ist.

## Claims

1. Ignition-starter switch (1) for motor vehicles with a receptacle for an additional device (3) such as, for example, a withdrawal stop, which co-operates with the switch, for the ignition key, characterised in that the housing (4) of the ignition-starter switch (1) has a push-in unit (7) for carrying the additional device (3), which unit is inserted in a laterally projecting housing extension (5) with a receptacle opening (6), completely covers the receptacle opening (6) and can be clipped onto the housing extension (5) by means of a releasable snap-action connection.

2. Ignition-starter switch with an additional device according to claim 1, characterised in that the housing (4) of the ignition-starter switch (1) has an essentially circular cross section from which the housing extension (5) with the receptacle (2) for the additional device (3) projects approximately tangentially to the outer housing wall (8) and off-centre with respect to the centre axis (9) of the switch housing (4).

3. Ignition-starter switch with an additional device according to claim 1 or 2, characterised in that the receptacle opening (6) for the additional device (3) in the housing extension (5) is enclosed by three wall parts (10, 11, 12) which each adjoin one another at a right angle and which leave a side wall opening free between them at the underside of the housing extension (5), which opening can be closed together with the receptacle opening (6) by the push-in unit (7).

4. Ignition-starter switch with an additional device according to one of claims 1 to 3, characterised in that in the region of the housing extension (5) for the additional device the outer wall of the switch housing (4) comprises an aperture (13) which is only open to the extent required for the additional device (3) to operate.

5. Ignition-starter switch with an additional device according to one of claims 1 to 4, characterised in that the push-in unit (7) is of an angular construction and has a rear wall (14), which closes the receptacle opening (6) in the housing extension (5), and a push-in unit bottom (15) which projects from the rear wall at a right angle and closes the housing extension (5) at its underside.

6. Ignition-starter switch with an additional device according to one of claims 1 to 5, characterised in that parallel, spring clip fastenings (16, 17) project on both sides of the push-in unit bottom (15) from the rear wall (14) of the push-in unit (7), engage in parallel guide grooves (18, 19) in the two parallel side walls of the housing extension (5) and are secured in the inserted position by detent lugs (20, 21).

7. Ignition-starter switch with an additional device according to one of claims 1 to 6, characterised in that the clip fastenings (16, 17) are U-shaped and secured in the inserted position by way of their U-bridge (22) by detent lugs (20, 21), which project outward in the guide grooves (18, 19) in the housing extension (5), at both side walls of the housing extension (5).

8. Ignition-starter switch with an additional device according to one of claims 1 to 7, characterised in that retaining grooves (23) and/or apertures (24) are provided in the rear wall (14) and the bottom (15) of the push-in unit (7) for the clip-type fastening of various additional devices (3).

9. Ignition-starter switch with an additional device according to one of claims 1 to 8, characterised in that the switch housing (4) is formed in one piece from a plastic material with the housing extension (5).

10. Ignition-starter switch with an additional device according to one of claims 1 to 9, characterised in that the push-in unit (7), which covers the receptacle opening (6) in the housing extension (5), is formed in one piece from a plastic material with the lateral clip fastenings (16, 17) projecting from the rear wall (14) in parallel with one another.

## Revendications

1. Contacteur d'allumage et de démarreur (1) pour véhicules automobiles comportant un logement pour un dispositif supplémentaire (3), par exemple un dispositif de blocage empêchant le retrait de la clé de contact qui coopère avec le contacteur, caractérisé par le fait que le boîtier (4) du contacteur d'allumage et de démarreur (1) présente pour la réception du dispositif supplémentaire (3) un tiroir (7) qui s'engage dans un appendice (5) du boîtier saillant latéralement et pourvu d'une ouverture réceptrice (6), couvre complètement cette ouverture réceptrice (6) et peut être clipé sur l'appendice (5) du boîtier au moyen d'un encliquetage élastique.

2. Contacteur d'allumage et de démarreur à dispositif supplémentaire selon la revendication 1, caractérisé par le fait que le boîtier (4) du contacteur d'allumage et de démarreur (1) a une section sensiblement circulaire de laquelle l'appendice (5) du boîtier pourvu du logement (2) pour le dispositif supplémentaire (3) fait saillie à peu près tangentiellement à la paroi extérieure (8) du boîtier et décalé latéralement de l'axe (9) du boîtier (4).

3. Contacteur d'allumage et de démarreur à dispositif supplémentaire selon l'une des revendications 1 et 2, caractérisé par le fait que l'ouverture réceptrice (6) pour le dispositif supplémentaire (3) prévue sur l'appendice (5) du boîtier est entourée par trois parties de paroi se joignant à angle droit (10, 11, 12) qui laissent entre elles sur le côté inférieur de l'appendice (5) du boîtier une ouverture de paroi latérale qui peut être fermée conjointement avec l'ouverture réceptrice (6) par le tiroir (7).

4. Contacteur d'allumage et de démarreur à dispositif supplémentaire selon l'une des revendications 1 à 3, caractérisé par le fait que la paroi extérieure du boîtier (4) du contacteur présente dans la zone de l'appendice (5) du boîtier pour le dispositif supplémentaire un trou (13) de grandeur juste suffisante au fonctionnement du dispositif supplémentaire (3).

5. Contacteur d'allumage et de démarreur à dispositif supplémentaire selon l'une des revendications 1 à 4, caractérisé par le fait que le tiroir (7) est en forme d'équerre et a une paroi arrière (14) qui ferme l'ouverture réceptrice (6) de l'appendice (5) du boîtier et un fond (15) qui fait saillie à angle droit de celle-ci et ferme l'appendice (5) du boîtier sur son côté inférieur.

6. Contacteur d'allumage et de démarreur à dispositif supplémentaire selon l'une des revendications 1 à 5, caractérisé par le fait que de la paroi arrière (14) du tiroir (7) font saillie des deux côtés du fond (15) de celui-ci des étriers clips élastiques parallèles (16, 17) qui s'engagent dans des rainures de guidage parallèles (18, 19) faites sur les deux parois latérales parallèles de l'appendice (5) du boîtier et sont arrêtés en position engagée par des ergots d'encliquetage (20, 21).

7. Contacteur d'allumage et de démarreur à dispositif supplémentaire selon l'une des revendications 1 à 6, caractérisé par le fait que les étriers clips (16, 17) sont en forme de U et, en position engagée, arrêtés par leur âme (22) par des ergots d'encliquetage (20, 21) saillant vers l'extérieur dans les rainures de guidage (18, 19) faites sur l'appendice (5) du boîtier qui sont faits sur les deux parois latérales de cet appendice (5).

8. Contacteur d'allumage et de démarreur à dispositif supplémentaire selon l'une des revendications 1 à 7, caractérisé par le fait que sur la paroi arrière (14) et le fond (15) du tiroir (7) existent des rainures de retenue (23) et/ou des trous (24) pour une fixation clipée de différents dispositifs supplémentaires (3).

9. Contacteur d'allumage et de démarreur à dispositif supplémentaire selon l'une des revendications 1 à 8, caractérisé par le fait que le boîtier (4) du contacteur est fait d'une seule pièce, en plastique, avec l'appendice (5).

10. Contacteur d'allumage et de démarreur à dispositif supplémentaire selon l'une des revendications 1 à 9, caractérisé par le fait que le tiroir (7) couvrant l'ouverture réceptrice (6) de l'appendice (5) du boîtier est fait d'une seule pièce, en plastique, avec les étriers clips latéraux (16, 17) saillant parallèlement l'un à l'autre de la paroi arrière (14).
